# EUROPEAN PATENT APPLICATION

(11) **EP 1 376 119 A1**
(43) Date of publication of application: **02.01.2004**
(21) Application number: 01917640.3
(22) Date of filing: 29.03.2001
(51) Int. Cl.: G01N 27/447, G01N 35/04

(54) **ELECTROPHORESIS DEVICE**

(71) Applicant: Hitachi, Ltd., Chiyoda-ku, Tokyo 101-8010 (JP)
(72) Inventor: SHIBASAKI, Takehiko, c/o Instrum. Hitachi, Ltd., Hitachinaka-shi, Ibaraki 312-8504 (JP); IMAI, Kazumichi, c/o Instruments, Hitachi, Ltd., Hitachinaka-shi, Ibaraki 312-8504 (JP); KIMURA, Satoru, c/o Instruments, Hitachi, Ltd., Hitachinaka-shi, Ibaraki 312-8504 (JP)
(74) Representative: Strehl Schübel-Hopf & Partner
(86) International application number: PCT/JP2001/002679
(87) International publication number: WO 2002/079773

(57) **Abstract**

An electrophoresis device capable of supplying a sample accurately without positioning error using a rotary autosampler. A projection (17) is mounted on the lower surface of a detachable carousel (13) on a rotation axis thereof. A projection bearing (18) is mounted on a rotation axis of a turntable (15). The respective central axes are automatically aligned so that no eccentricity is caused by rotation. A pressing means is provided in a heater unit at a position corresponding to the position of the capillary, thereby reducing irregularities in the heating of the capillary. A sample-loaded end of the capillary is passed through a tubular electrode and adapted to operate with the electrode in an integral manner.

## Description

### TECHNICAL FIELD

The present invention relates to an electrophoresis device that can be used in DNA sequencing, for example.

### BACKGROUND ART

As a method of determining the base sequences of DNA or the like, gel electrophoresis is widely used. During electrophoresis, conventionally a sample is labeled with a radioisotope and then analyzed. This method, however, takes much time and labor. The method is also inconvenient in that it requires a strict radiation management and therefore requires a special facility for carrying out analysis. To address this problem, another method is being increasingly adopted in recent years whereby a sample is labeled with a fluorescent material. As separation means, a plate-like slab gel is known. It is now known, however, that the slab gel has the following problems: 1) It takes much time for loading a sample into each migration path; 2) Problems such as contamination among samples between adjacent migration paths tend to occur; and 3) So-called "smiling" phenomena tends to occur whereby the sample is tilted towards left or right away from the intended migration path, resulting in erroneous measurement results.

To deal with these problems, a method has been developed whereby a hollow capillary filled with gel is used as migration means instead of the plate-like migration plate. With capillaries, a sample can be handled more easily than with the slab gel, and they also allow for high-speed migration and high-sensitivity detection. Capillaries suffer less from the problems such as the spreading of the band or the creation of temperature gradient due to the influence of Joule heat when a high voltage is applied, than the slab gel. Capillaries can thus provide high-sensitivity detection with less spreading of band even when a high voltage is applied for migration.

In a capillary-type electrophoresis device, a beam of light emitted by an excitation light source passes through a condenser lens and is shone on a gel via a detection window of a capillary. The capillary is provided with a resin coating for strength-increasing and protection purposes. The resin coating, however, is removed at the capillary detection window where fluorescence detection takes place, and it enables high-sensitivity detection. When a fluorescence-labeled DNA fragment migrating in the gel within the capillary and passes through the irradiated region, fluorescence is emitted sequentially from the DNA fragment. The emitted fluorescence is detected by a photodetection system. The photodetection system is made up of a lens, an optical filter, a diffraction grating, and so on, and is used in identifying an analyte. The results of measurement are processed by a computer to determine the sequence of the DNA fragment, thus sequencing the DNA. Examples of the apparatus using capillary electrophoresis for detecting a fluorescence-labeled sample with laser light is disclosed in JP Patent Publication (Kokai) No. 12-74836 A (2000) and JP Patent Publication (Kokai) No. 11-23532 A (1999).

As a means of supplying a sample to a capillary, an autosampler is known which employs a rotating turntable equipped with a detachable carousel. In the conventional autosamplers, however, the rotation axis of the carousel does not necessarily coincide with the rotation axis of the turntable when the carousel is fitted on the turntable, possibly resulting in axial eccentricity during rotation. This could cause variations in the position of the sample container with respect to that of a sample-loading end of the capillary, making it impossible to load the sample. Further, after the loading of the sample, when the capillary is taken out of the sample container, a septum with which the container is covered may sometimes stick to the stripper and be unable to be detached therefrom. If the turntable is rotated in such a state, the operation of the autosampler could be blocked. When the sample is loaded into the capillary, the tip of the capillary is dipped in the sample together with an electrode such that the sample can be loaded by the application of voltage. The capillary, however, is not very strong and tends to bend easily, so that the tip of the capillary might not be positioned stably when inserted into the container. If this happens, the distance to the electrode varies, causing variations in the sample loading conditions.

A sample is subjected to electrophoresis in the gel that is controlled to a predetermined temperature. Migration results are sometimes not stable, due to inconsistent heating of the capillary along its length. Further, as the heat produced by the heater tends to be dissipated into ambient air, migration can sometimes takes a long time.

The sample is detected in the following manner. First, the detection window of the capillary is irradiated with an excitation light via an irradiation hole provided in a capillary holder with which the detection window of the capillary is retained. Then, fluorescence emitted by the fluorescence-labeled sample is detected by a photodetector via a detection hole provided in the capillary holder. Conventionally, however, the position where the capillary is held with respect to the irradiation hole and detection hole of the capillary holder is unstable. As a result, variations could be introduced into the measurement values depending on the manner in which the capillary is attached to the capillary holder.

### SUMMARY OF THE INVENTION

It is therefore an object of the present invention to solve the aforementioned problems of the prior art and to improve the reliability of autosampler operation. It is another object of the invention to improve the structure of the sample-loading end of the capillary and electrode which are inserted into a container, so that the sample can be loaded into the capillary reliably. It is still another object of the invention to reduce the variations in electrophoresis conditions in a capillary electrophoresis device. It is still yet another object of the invention to improve the manner in which the capillary is attached to the capillary holder in order to increase the reliability of sample detection.

In order to achieve the foregoing objects of the invention, a projecting structure is provided on the rotation axes of the carousel and turntable of the autosampler such that the respective central axes can be automatically aligned. Further, as there are two kinds of containers to be mounted on the autosampler, two kinds of projections adapted to the shape of each sample container are provided on the lower surface of a stripper. In this way, the area of contact between the stripper and the top of the containers can be reduced, so that the sticking of the containers to the stripper can be prevented. The electrode that is dipped into the sample is made hollow, so that a sample-loaded end of the capillary can be passed through the hollow electrode. The end of the capillary is made to slightly protrude beyond the electrode such that the capillary can be correctly positioned with respect to the electrode at all times, thereby ensuring a stable sample loading operation.

A pressing portion of a pressing plate is disposed at a position corresponding to the position of arrangement of the capillary on a heater plate, so that the capillary can be brought into intimate contact with the heater plate, thus reducing heating irregularities. Further, a projection and a groove are provided on a heater frame in order to reduce the dissipation of heat.

A U-shaped groove is provided for making it easy to position the capillary with respect to excitation light and to a fluorescence detection opening and for enhancing the reproducibility of the mounting position of the capillary. The depth of the groove is made smaller than the diameter of the capillary such that the capillary can be held in place via an exposed surface thereof, thus enhancing the reproducibility of the capillary mounting position.

The invention provides an electrophoresis device comprising:
a capillary for electrophoresis;
a power supply for applying voltage across the capillary;
a heater unit for maintaining the temperature of the capillary at a predetermined temperature;
a detection unit for detecting a sample migrating in the capillary; and
an autosampler for selectively inserting a sample-loaded end of the capillary into a sample container containing a sample solution or a buffer container containing a buffer, wherein the autosampler comprises:
   a turntable;
   hoisting/lowering means for moving up or down the turntable;
   rotation drive means for rotating the turntable by a predetermined angle; and
   a carousel having a plurality of container mount positions along the circumference thereof and capable of being attached or detached from the turntable, wherein
   one of the turntable and the carousel has a projection on a central axis thereof and the other has a projection bearing on a central axis thereof adapted to receive the projection, wherein the carousel can be mounted on the turntable at an arbitrary rotation position thereof, the electrophoresis device further comprising a sensor for detecting the rotation position of the carousel.

The electrophoresis device may comprise a stripper adapted to press down on an upper part of a container on the carousel, which the capillary is inserted, as the turntable is lowered by the hoisting/lowering means. The stripper may comprise a projection for pressing down on the buffer container and another projection for pressing down on the sample container, the projections for the different containers being located at different positions.

The capillary may pass through the hollow electrode near the sample-loaded end and protrude beyond the tip of the hollow electrode. In this structure, the sample-loaded end of the capillary and the electrode can be inserted together into the sample or buffer container, thereby ensuring a stable sample loading operation.

The heater unit for maintaining a predetermined temperature of the capillary may comprise a planar heater plate, a pressing plate for pressing down the capillary into intimate contact with the heater plate, and a plurality of pressing means for pressing the pressing plate down on the heater plate. The pressing means may be disposed behind the pressing plate at positions corresponding to the position of, and therefore along the shape of, the capillary.

The heater plate and the pressing plate may preferably each comprise either a projection or a groove adapted to engage with the projection at the edge thereof. In this structure, the heat with which the temperature of the capillary is maintained can be prevented from dissipated via gaps in the peripheral edge.

The detection unit may comprise a capillary holder comprising a positioning groove for holding the capillary such that a detection window thereof can be correctly positioned, a light guide portion for guiding an excitation light towards the detection window of the capillary that is being held, and another light guide portion for allowing fluorescence emitted by the capillary to be acquired. The positioning groove may be formed in the shape of U with the same width as the diameter of the capillary and with a depth smaller than the diameter of the capillary.

### BRIED DESCRIPTION OF THE DRAWINGS

Fig. 1 schematically shows the electrophoresis device according to the invention.
Fig. 2 shows portions of an autosampler and a heater unit.
Fig. 3 shows a carousel.
Fig. 4 shows a cross sectional view of the carousel and the turntable.
Fig. 5 shows a flowchart of an example of the procedure of analysis by electrophoresis using the autosampler.
Fig. 6 shows a perspective view of a stripper.
Fig. 7 shows side views of the stripper.
Fig. 8 shows a perspective view of septa.
Fig. 9 illustrates how sample is loaded into the capillary.
Fig. 10 shows a perspective view of the heater unit.
Fig. 11 shows the heater unit from which a holding sponge and a pressing plate have been removed.
Fig. 12 shows a perspective view of a capillary holder.
Fig. 13 shows a cross-sectional view of the capillary holder.

### BEST MODE FOR CARRYING OUT THE INVENTION

The invention will be hereafter described by referring to the attached drawings.

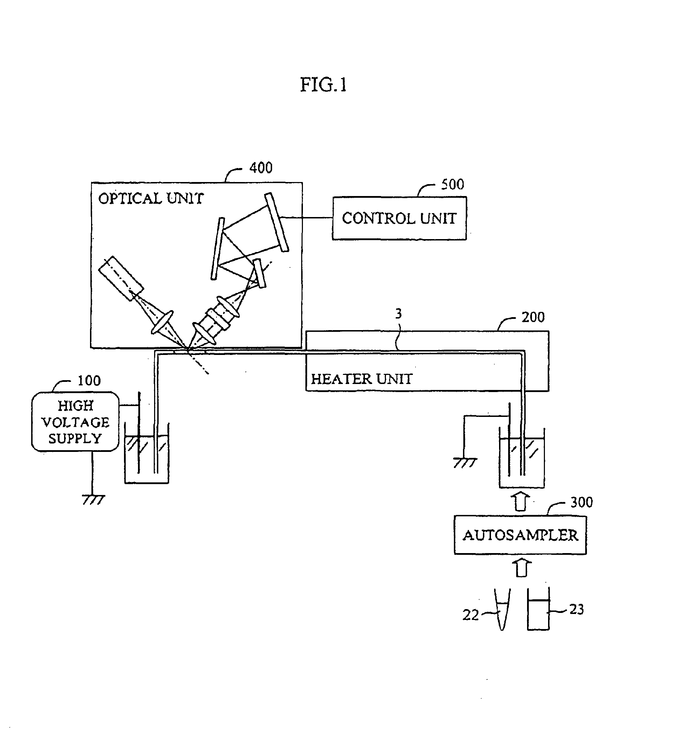

Fig. 1 shows an overall view of the electrophoresis device according to the invention. The electrophoresis device includes a high-voltage unit 100 for applying voltage across a capillary 3 for causing a fluorescence-labeled sample to migrate. It also includes a heater unit 200 for controlling the temperature of the capillary 3 so that separation can occur stably. It further includes an autosampler 300 for holding a plurality of sample containers 22 and buffer containers 23 and dipping an end of the capillary 3 into a sample or a buffer solution automatically. It further includes an optical unit 400 for irradiating the sample migrating in the capillary with an excitation light and detecting the resultant fluorescence. The device further includes a control unit 500 for processing a detected signal. By supplying the device with DNA as a sample, the base sequence of the DNA can be determined.

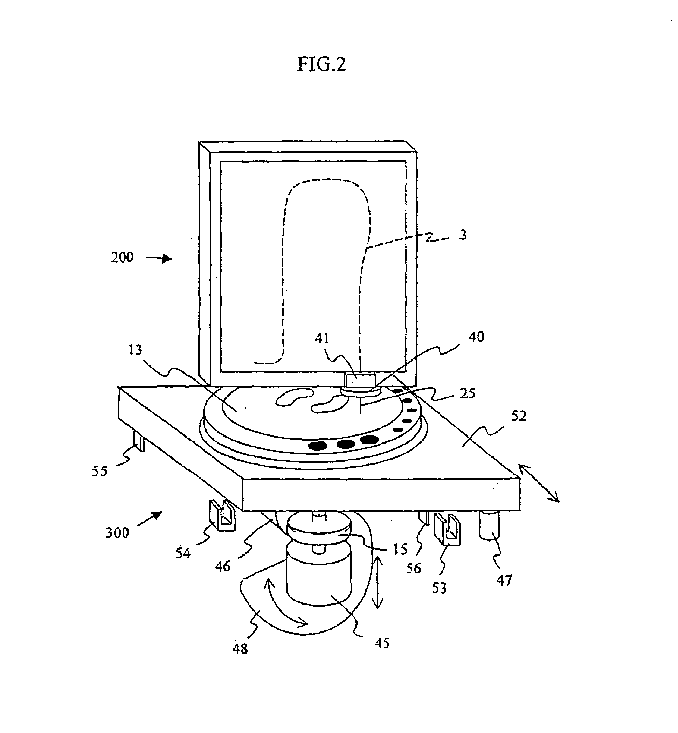

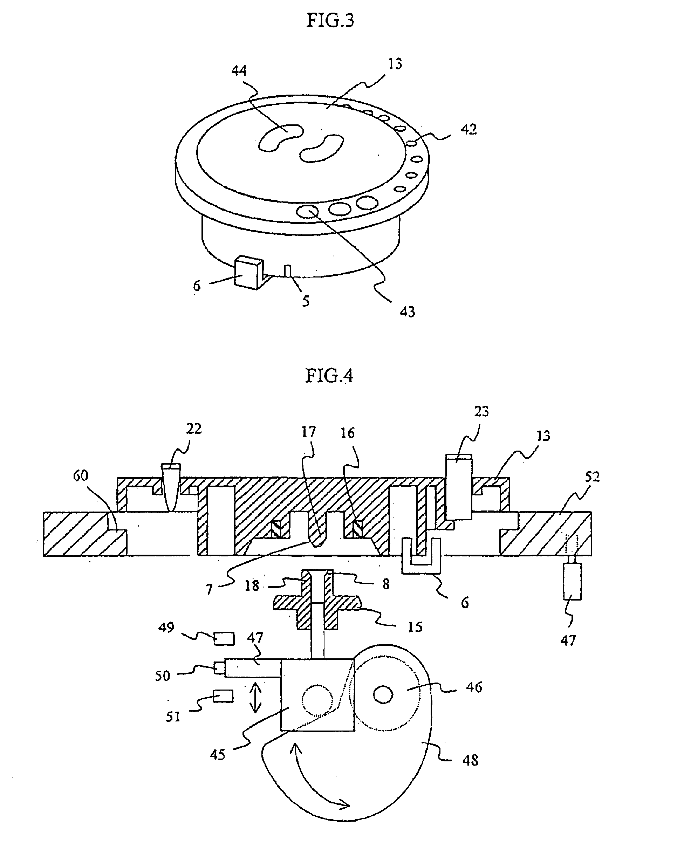

Fig. 2 shows a portion of the electrophoresis device of the invention. Fig. 3 shows a carousel 13 used in the autosampler 300. Fig. 4 shows a cross-section of the carousel 13 and a turntable 15. The autosampler 300 adopted in the electrophoresis device of the invention is of a rotation type, and it is mounted below the heater unit 200.

As shown in Fig. 3, the carousel 13 is disc-shaped and is provided with openings 42 for the insertion of the sample containers 22 and openings 43 for the insertion of the buffer containers 23 at the upper edge thereof. In the illustrated example, the openings for the sample containers 22 are arranged in a row; preferably, however, they may be arranged in two rows, one inside and the other outside. The sample container 22 and the buffer container 23 have different volumes with different shapes and sizes. For this reason, the openings 42 and 43 for the two types of containers are provided. At the center of the carousel upper surface is provided two arc-shaped openings 44 into which the operator can put his or her fingers for easy handling of the carousel.

The carousel 13 can be detached from the turntable 15, so that the sample container 22 with a sample inside and the buffer container 23 with a buffer solution inside can be mounted on the carousel 13 as detached from the turntable 15 and thus outside the device. Below the carousel 13 a magnet 16 is embedded which, by its magnetic drawing force, the carousel 13 can be attracted to and retained by the turntable 15, which is made of steel. Below the carousel 13 is further provided a light opening 5 for allowing the detection of a rotation start position. A sensor 6 including a light source and a photodetector is mounted opposite the light opening 5 on a member (not shown) mounting a motor 45 for rotating the turntable 15. The sensor 6 can detect the light opening 5 of the carousel 13 in order to identify the rotation start position of the carousel. Thus, the rotation position of the carousel 13 can be determined based on a detection signal provided by the sensor 6 even if the rotation direction position of the carousel 13 is not determined at the time of mounting on the turntable 15.

As shown in Fig. 4, a projection 17 is provided on the lower surface of the carousel 13 along the central axis thereof. Correspondingly, a projection bearing 18 is provided on the upper surface of the turntable 15 along the central axis thereof, on which turntable the carousel 13 is placed. These corresponding structures allow the respective rotations axes to be automatically aligned as the carousel 13 is mounted on the turntable 15, eliminating rotation eccentricity. The tip of the projection of the carousel 13 and the opening of the projection bearing 18 of the turntable 15 are provided with tapering such that they can easily mate. Thus the positioning error between the sample container positions and the capillary 3 and electrode 25 can be eliminated, allowing for an accurate sample loading. In the illustrated example, the projection is provided along the central axis of the carousel 13 while the projection bearing is provided along the central axis of the turntable 15. Preferably, however, the projection may be provided along the central axis of the turntable 15 while mounting the projection bearing along the central axis of the carousel 13.

The autosampler 300 has built inside the motor 45 as a drive source for rotating the carousel 13 along its circumference, and a motor 46 for moving up or down a cam 48 so that the motor 45 can be moved up or down. The motor 45 rotates the turntable 15 attached at the end of the rotation axle of the motor 45, thus driving the carousel 13 mounted on the turntable 15 along its circumference.

The height of the turntable 15 of the autosampler 300 can be adjusted to high, middle, and low positions, each of which can be detected by sensors 49, 50, and 50, respectively. As the motor 45 and turntable 15 are raised by the rotation of the motor 46, a shield plate 47 for height detection that is securely attached to the motor 45 passes the sensors 49, 50 or 51, so that the sensors can detect the height of the turntable 15. When the turntable 15 is raised to high position, the electrode 25 and the tip of the capillary 3 are inserted and dipped into the sample in the sample container 22 or the buffer in the buffer container 23 mounted on the carousel 13. As the turntable 15 is then lowered to middle position, the electrode 25 and the capillary 3 are taken out of the sample container 22 or buffer container 23, when the turntable 15 can be rotated.

As the turntable 15 is further lowered to low position, the carousel 13 is separated from the turntable 15 and held on a tray 52. The carousel 13 is retained by the turntable 15 via the magnetic drawing force provided by the magnet 16 mounted on the lower surface of the carousel 13. However, the carousel 13 can be separated from the turntable 15 because the edge portion of the carousel 13 rests on a step portion 60 of the tray 52 and the force of piling down the turntable 15 overcomes the force of the magnet 16 which retain the carousel 13.

Tray 52 is provided with a motor 47 for driving the tray to the front and back. Specifically, the tray 52 on which the carousel 13 separated from the turntable 15 is retained is driven by the motor 47 into and out of the electrophoresis device main body. Sensors 53 and 54 for detecting front and rear positions of the tray 52 are provided at the front and rear of the autosampler 300. The tray 52 can bc positioned towards the front and back as shield plates 55 and 56 mounted at the front and rear of the tray 52 for position detection purposes pass by the sensors 53 and 54.

The carousel 13 is mounted on the turntable 15 as follows. The tray 52 is driven by the motor 47 until the shield plate 55 is detected by the sensor 54, thus drawing the tray 52 to the front of the electrophoresis device main body. With the tray 52 drawn out of the electrophoresis device, the carousel 13 is placed on the tray 52 such that the periphery of the carousel 13 sits on the step portion 60 of the tray 52. In this way, the central axis of the carousel 13 can be roughly positioned with respect to the tray 52. Then, the motor 47 is driven so that the tray 52 is moved backward until the sensor 53 detects the shield plate, thus storing the tray 52 into the electrophoresis device main body. The tray 52 is stopped when the carousel 13 is positioned directly above the turntable 15.

Thereafter the cam 48 is driven by the motor 46 to raise the turntable 15, which is now at low position. The projection 17 provided at the central axis of the carousel 13 is then fitted into the projection bearing 18 of the turntable 15, whereby the carousel 13 can be placed on the turntable 15 with their axes being automatically aligned. After the carousel 13 is fixed in place by the magnetic force acting between the magnet 16 of the carousel 13 and the turntable 15, the upward movement of the turntable 15 is stopped at middle position. The motor 45 is then driven to rotate the turntable 15. After the rotation start position of the carousel 13 is detected by the sensor 6, the carousel 13 is rotated by a predetermined angle. The cam 48 is then driven again by the motor 46 to raise the turntable 15 to high position, so that the tips of the electrode 25 and capillary 3 can be inserted into the intended sample container 22 or buffer container 23. Thereafter the turntable 15 is lowered to middle position to take the electrode 25 and the capillary 3 out of the container.

The carousel 13 is taken out in the following manner. The turntable 15 is towered to low position so that the carousel 13 is separated from the turntable 15. The carousel 13 is now retained on the tray 52. The motor 47 is then driven to move the tray 52 forward and out of the electrophoresis device. The carousel 13 can be attached or detached from the turntable 15 automatically, so that the user only needs to place the carousel 13 on the retractable tray 52. This sequence of events is stored in memory in the form of a program in order to allow for automatic operation.

As shown in Fig. 2, a support 40 is attached to the bottom of the heater unit 200, to which support the electrode 25 for applying voltage to the capillary 3 and the end of the capillary 3 are attached. The rotation position of the turntable 15 is controlled such that the intended sample container 22 is located directly below the support 40. By rotating the turntable 15 by a predetermined angle in a clockwise or anti-clockwise direction and moving it up or down, the tips of the capillary 3 and electrode 25 securely fixed to the support 40 mounted at the bottom of the heater unit 200 can be dipped into the sample or buffer. The predetermined angle of rotation can be provided by the motor 45 while the height of the turntable 15 can be controlled by the motor 46, so that the container into which the electrode 25 and the capillary 3 are dipped can be sequentially changed. As the rotation start position of the carousel 13 is not determined by a mechanical structure such as a positioning pin, the carousel 13 can be mounted at an arbitrary rotation position along the circumference of the turntable 15 irrespective of the position of the sample that is attached.

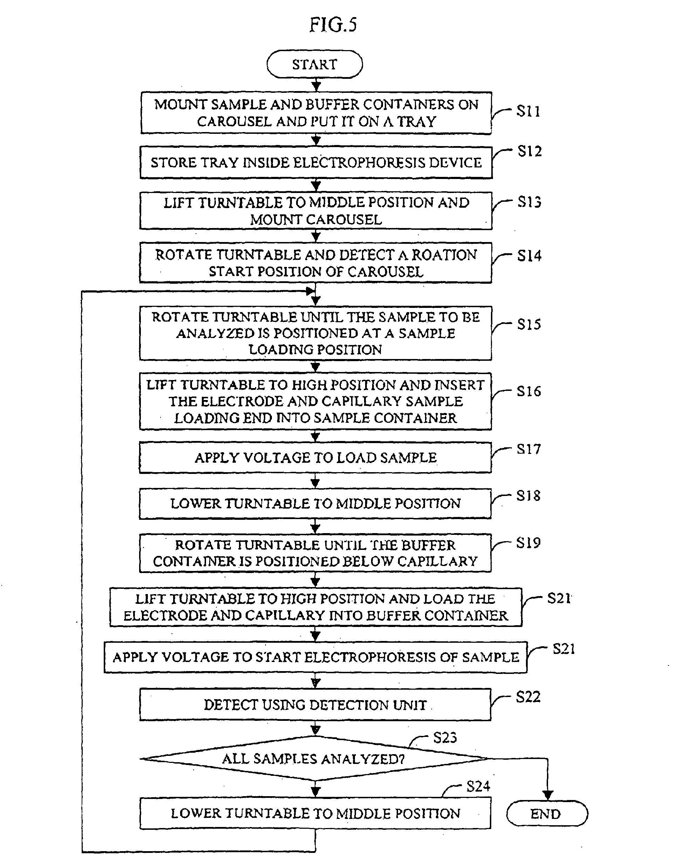

Now referring to Fig. 5, the sequence of electrophoresis analysis using the autosampler will be described with reference to a flowchart shown in the figure.

A predetermined number of sample containers 22 containing samples and buffer containers 23 containing buffers are set at predetermined positions on the carousel 13, and then the carousel 13 is placed on the tray 52 of the autosampler 300 that is now drawn out of the electrophoresis device (S11). The motor 47 is then driven to retract the tray 52 into the electrophoresis device (S12). As the tray 52 is returned back to a predetermined position inside the device, the motor 46 is driven to raise the turntable 15 up to middle position. The projection 17 provided at the central axis of the carousel 13 is fitted into the projection bearing 18 of the turntable 15, so that the carousel 13 can be mounted on the turntable 15 with their axes being automatically aligned (S13). The turntable 15 is then rotated by the motor 45, and the rotation start position of the carousel is detected as the position of the light opening 5 of the carousel is detected by the sensor 6 (S14).

Then, the turntable is rotated by a predetermined angle by the motor 45 such that an initial sample container is positioned below the capillary 3 and the hollow electrode 25 hanging down from a capillary unit 41 (S15). Then, the motor 46 is driven to raise the turntable to high position, whereby the electrode 25 and the sample loading end of the capillary 3 are dipped into the solution in the sample container via a septum 21a of the sample container 22 (S16). A high voltage is then applied between the electrode 25 dipped in the sample and the electrode in the buffer in which the other end of the capillary 3 is dipped by a power supply 100, thus loading the sample into a sample-loaded end of the capillary (S17).

After the sample is loaded, the motor 46 is driven to lower the turntable 15 to middle position (S18). The turntable 15 is then rotated by the motor 45 such that the buffer container 23 containing a buffer can be positioned below the hollow electrode 25 and the capillary 3 hanging down from the capillary unit 41 (S19). Then the motor 46 is driven to raise the turntable 15 to high position where the electrode 25 and the sample-loaded end of the capillary with loaded sample are dipped into the buffer in the buffer container 23 via the septum 21 b (S20). Thereafter a voltage is applied from the power supply 100 between the electrode 20 in the buffer container and the electrode in the buffer in which the other end of the capillary 3 is dipped, whereby electrophoresis of the sample loaded in the loaded end starts (S21). The electrophoresed sample, is then irradiated with excitation light at a detection portion whereby fluorescence from the fluorescent substance with which the sample is labeled is detected (S22), thus completing the analysis of the sample in a single sample container.

If it is determined in step 23 that a sample to be analyzed is remaining on the carousel 13, the turntable is lowered to middle position (S24) and then the routine returns to step 15 whereupon the turntable is rotated such that the sample to be analyzed next is located at the sample loading position. Thereafter, the process up to step 22 is repeated until all of the samples are analyzed.

When all of the samples placed on the carousel have been analyzed, an end process is carried out, in which the turntable is lowered to low position, the tray 52 is drawn out of the device with the motor 47, and the carousel on which the samples that have been analyzed are mounted is removed. The tray 52 from which the carousel has been removed is retracted into the device with the motor 52, thus completing all of the operations.

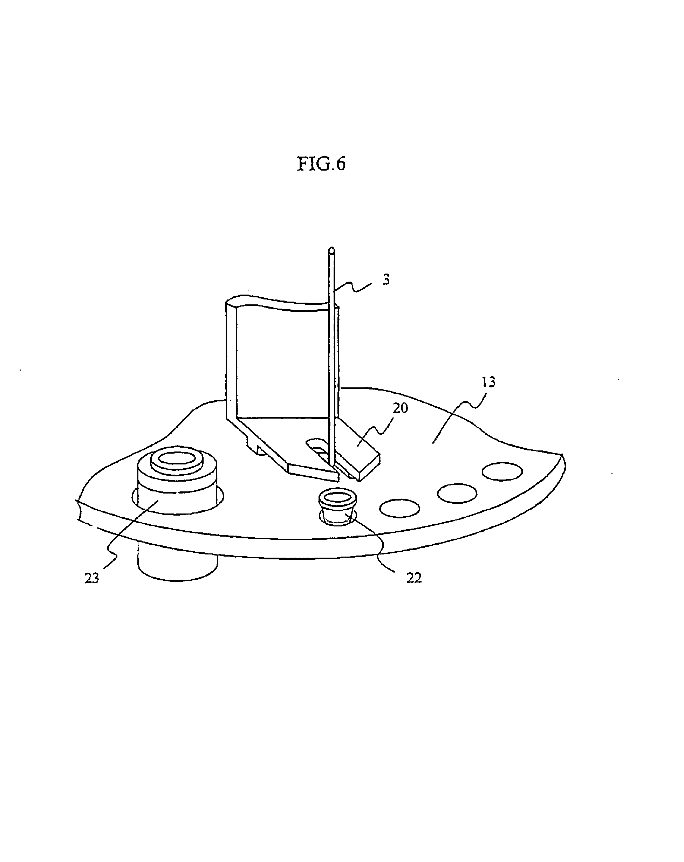

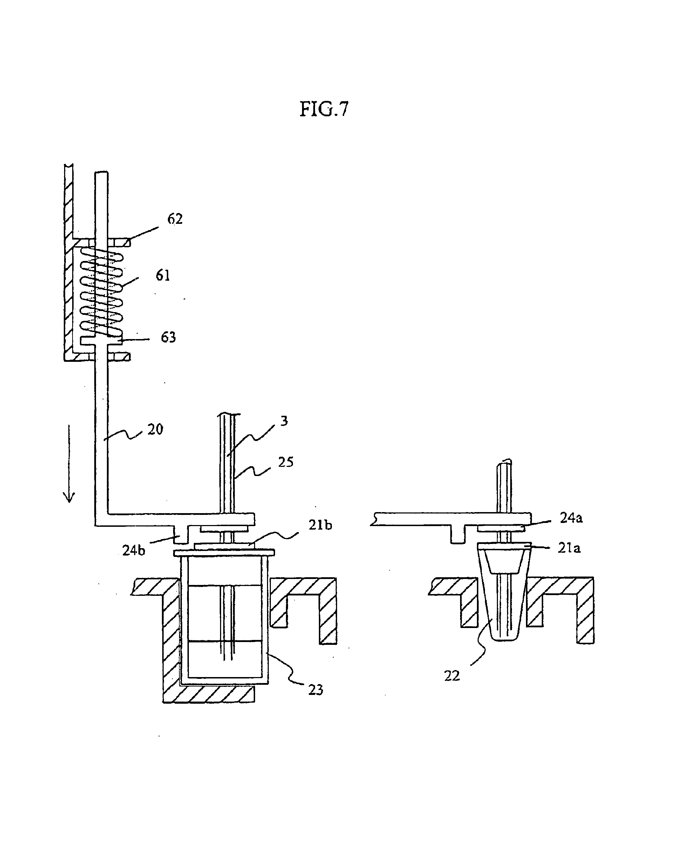

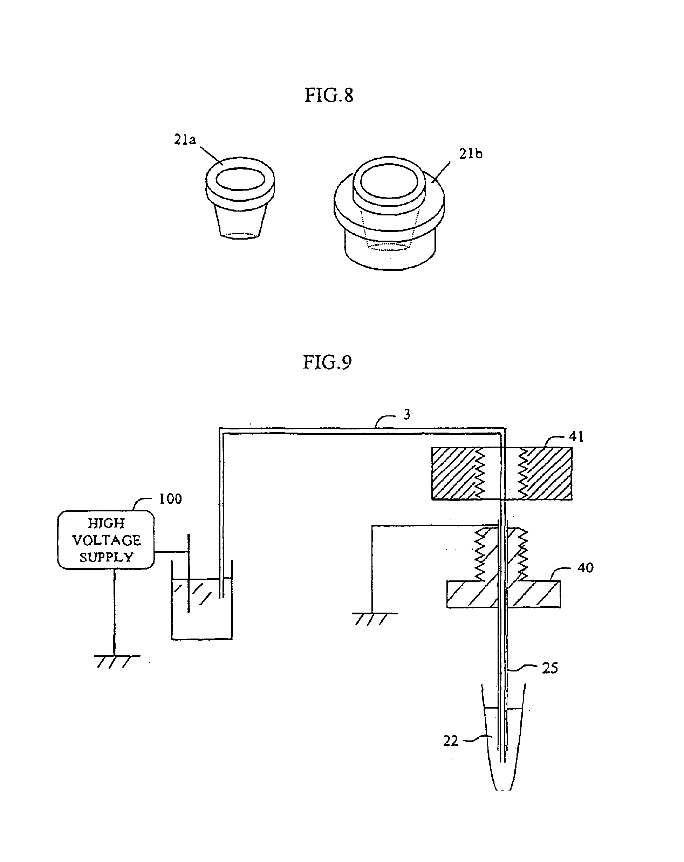

The structure of the stripper according to the invention will be described next. Fig. 6 shows a perspective view of an example of the stripper, Fig. 7 shows a side view of the stripper, and Fig. 8 shows the septa with which the sample and buffer containers are covered.

The sample containers 22 and the buffer containers 23 used in the electrophoresis device are capped by septa 21a and 21b as shown in Fig. 8 for preventing the evaporation of the solutions inside. There is a gap at the bottom of each septum for allowing the passage of the electrode 25 and the capillary 3. The tips of the capillary 3 and electrode 25 are inserted into the gaps in the septa 21a and 21 b as the turntable 15 is raised and thus dipped into the solutions inside. When the turntable 15 is lowered, the capillary 3 and electrode 25 arc squeezed in the gaps of the septa 21a and 21b and cannot be easily released merely by the weight of the containers 22 and 23. Thus, a stripper 20 is provided as a means of pulling down the containers away from the capillary 3 and the electrode 25.

The stripper 20 includes a spring 61 as a drive means and is mounted such that the stripper can be moved up or down only by a predetermined distance with respect to a guide member 62 securely fixed to the device main body. When the turntable 15 is raised from middle to high position in the height direction, the stripper 20 has its bottom surfaces come into contact with the septa of the containers and is therefore pushed upwards. As a result, the spring 61 is compressed between the guide member 62 and a protruding portion 63 provided on the stripper 20. As the turntable 15 is lowered from high to middle position in the height direction, the containers tend to rise above the carousel 13 along with the capillary 3 and the electrode 25 fixedly mounted on the heater unit 11. The containers, however, are pushed down by the stripper 20 via the reacting force of the spring 61 and are therefore pulled away from the capillary 3 and the electrode 25.

The septa 21a and 21b arc different in material and size depending on whether they are for sample containers or buffer containers. The septa are made of silicone resin and are sticky, so that they tend to stick to the surface of the stripper if a planar contact is formed therebetween. Thus, in order to reduce the area of contact and thus to avoid the sticking of the septa, projections 24a and 24b are provided at the bottom of the stripper 20. In this way, the stripper 20 can come into contact with the septa 21a and 21b via a point contact.

The size and shape of the septa 21 a and 21 b also vary depending on the intended containers. The two kinds of projections 24a and 24b are adapted for individual containers such that different (two in the illustrated example) kinds of containers can be handled by a single stripper 20, as shown in Fig. 7. For example. with respect to the sample container 22, the projection 24a is adapted to come into contact with the smaller septum 21a, while with respect to the buffer container, the projection 24b is adapted to come into contact with the larger septum 21b. The stripper 20 of the invention thus pushes the septa with these projections adapted for individual containers, allowing the single type of stripper 20 to pull the septa 21a and 21b without their sticking to the stripper 20. This feature can therefore prevent the problems of the containers 22 or 23 being stuck with the capillary 3 or the electrode 25, or the septa of the containers sticking to the stripper, as a result of which the operation of the autosampler could be hindered.

Hereafter, the structure will be described of the capillary end portion and that of the electrode, which are dipped in the solutions in the containers mounted on the autosampler. Fig. 9 shows the capillary 3 and the electrode 25 dipped in the sample in the sample container 22. The electrode 25 has a structure similar to that of a hollow pipe, through which the capillary 3 is passed. The capillary 3 is used with its tip protruding beyond the tip of the electrode 25 by a distance of about 0.5 mm. While the capillary 3 and the electrode 25 are different structures, they operate together when the capillary 3 is passed through the hollow portion of the electrode 25. Thus, the insertion of the capillary 3 into the container and the dipping of the same into the sample can be carried out reliably, thus stabilizing the sample loading operation.

Conventionally, there has been no connection between the electrode 25 and the capillary 3, and they are typically inserted into the container in parallel. As a result, it is often the case that the capillary is displaced during insertion, thus failing to be dipped in the sample simultaneously with the electrode, or that the tip of the capillary scrapes against the septum, whereby the loading of sample is hindered. In accordance with the structure of the invention, the capillary 3 and the electrode 25 can be inserted into the container together, so that the aforementioned problems of the prior art can be overcome. As the capillary 3 and the electrode 25 are not glued to each other, they can be maintained or replaced separately. The electrode 25 is integrated with a support 40 by which the electrode is supported. The support 40 is provided with a thread so as to be easily mounted on the capillary unit 41. Preferably, the support 40, with which the electrode 25 is integrated, may have a cassette-like structure, so that it can be inserted into the capillary unit 41.

Hereafter, the heater unit 200 will be described. The heater unit is used for heating the capillary to a certain temperature and maintain the temperature during electrophoresis.

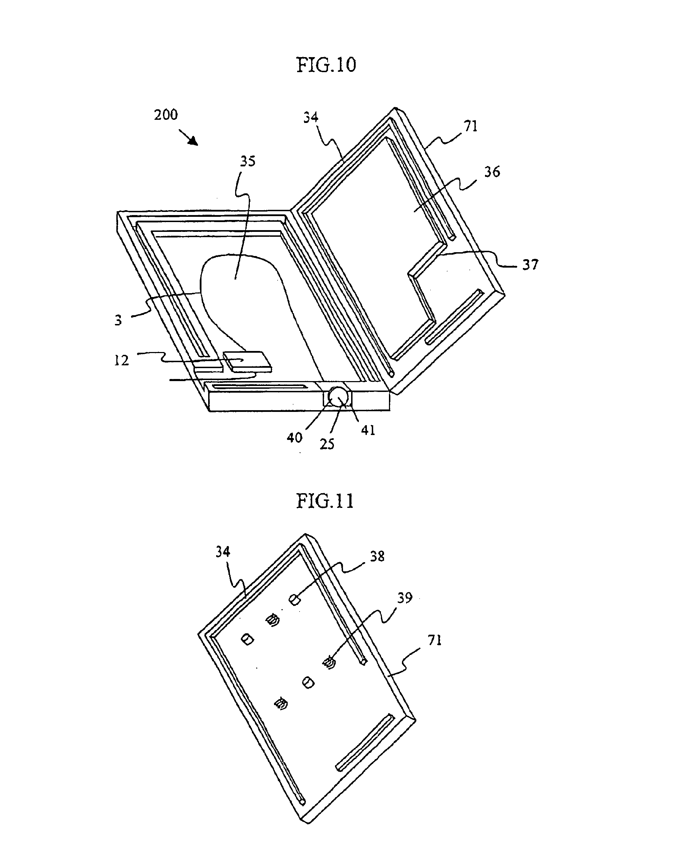

Fig. 10 shows a perspective view of the heater unit 200, which includes a heater plate 35 composed of a metal plate covered with a thermal sheet, and a freely openable door 71. The capillary 3 is disposed on the heater plate 35. The capillary 3 is made of a quarts tube with a predetermined length. It is fixed in place by the supporter 40 and a capillary holder 12, which is a detection unit, that have a predetermined positional relationship, so that the capillary 3 assumes a predetermined curved figure when disposed on the heater plate 35. After the capillary 3 is disposed on the heater plate 35, the door 71 that has a pressing plate 37 with a holding sponge 36 affixed thereto is closed, whereby the capillary 3 is brought into intimate contact with the heater plate 35. As a locking mechanism, the door 71 has a ball catch mounted near the hinge of the door, and also a magnet is mounted on the opposite end from where the ball catch is mounted. Thus, the door when closed can be fastened by the retaining force of the ball catch and the drawing force of the magnet.

Fig. 11 shows the door 70 of the heater unit 200 where the pressing plate 37 with the holding sponge 36 affixed thereto is removed. As shown, the door 71 has support columns 38 for supporting the pressing plate 37 and springs 39 for pressing the pressing plate 37 against the heater plate 35. The support columns 38 and the springs 39 are arranged at different locations, with the springs 39 located at positions corresponding to the position of the capillary 3, thereby ensuring that the capillary 3 can be brought into intimate contact with the heater surface by the pressing plate 37. In this manner, unevenness in the temperature distribution in the capillary 3 can be reduced and variations in the migration distance of the sample can be reduced. Conventionally, the contact between the capillary and the surface with which the temperature of the capillary is controlled has not been sufficient. As a result, slight unevenness could occur in the temperature distribution in the capillary, resulting in unstable sample separation time or accuracy and variations in analysis results. The heater unit 200 of the invention, however, can provide a stable separation operation.

Along the peripheral edge of the door 71 supporting the frame of the heater unit 200 and the pressing plate is provided a projection 34 to prevent the dissipation of the heat produced by the heater plate 35 to maintain the temperature of the capillary 3 via gaps at the peripheral edge. When the device is operated in a low temperature environment, it conventionally takes a long period of time for separation. In accordance with the invention, however, the migration time can be prevented from being extended.

The capillary holder 12 will be described next. The capillary holder 12 is mounted inside the heater unit 200 for holding the capillary 3 in place at around its detection window.

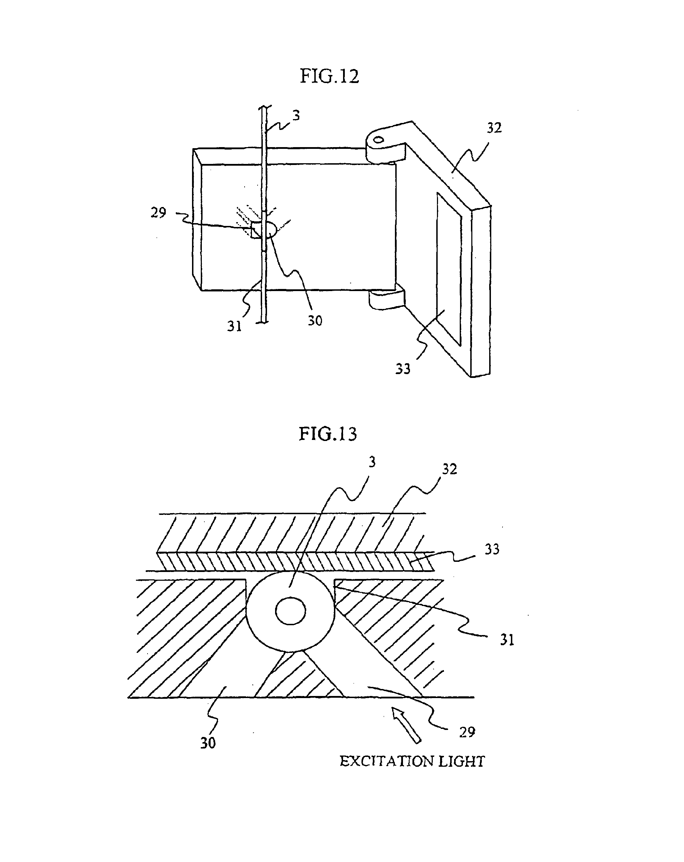

Fig. 12 shows a perspective view of the capillary holder 12 according to the invention. It includes a groove 31 into which the capillary 3 is inserted and positioned therein, a pressing plate 32 for holding the capillary, a rubber sheet 33 affixed to the pressing plate for holding the capillary, and an irradiation opening 29 through which the detection window of the capillary is irradiated with excitation light. The capillary holder 12 also includes a detection opening 30 through which emitted fluorescence is detected.

Now referring to Fig. 13, the capillary positioning groove 31 is formed in the shape of U. Its depth is less than the diameter of the capillary but its width is the same as the diameter of the capillary. Accordingly, the capillary can be positioned via the sides and bottom of the groove 31 and the surface of the pressing plate 32. The capillary 3 is held in place by the pressing plate 32 pressing the side of the capillary that is slightly protruding beyond the surface of the capillary holder 12. The rubber sheet 33 affixed to the pressing plate 32 prevents the pressing plate 32 from directly coming into contact with the capillary 3 and thus prevents damage thereto. Conventionally, the depth of the groove for holding the capillary is so deep relative to the diameter of the capillary 3 that the capillary is not stably positioned therein. As a result, there is little reproducibility in the position of the capillary with respect to the size of the excitation light beam with which the capillary is irradiated through the irradiation opening. Thus, it is often the case that fluorescence cannot be obtained from the sample in the capillary depending on the manner in which the capillary is mounted. Using the capillary holder 12 of the invention, however, the reproducibility of the capillary position with respect to the irradiation opening 29 and the detection opening 30 can be ensured, so that the capillary can be attached with greater maneuverability and detection accuracy can be improved.

### INDUSTRIAL FIELD OF APPLICATION

Thus, in accordance with the invention, the positioning error in the autosampler can be eliminated and the sample loading can be carried out accurately. During sample loading, the capillary can be dipped into the sample in a reliable manner, and the sticking of the containers to the stripper can be prevented, thus ensuring a smooth operation of the autosampler. Unevenness in heating the capillary can be reduced, so that variations in the migration time can be minimized and whole migration time can be reduced. Furthermore, the capillary window can be mounted with an enhanced reproducibility, thereby increasing the reliability of measurement results.

## Claims

1. An electrophoresis device comprising:
a capillary for electrophoresis;
a power supply for applying voltage across the capillary;
a heater unit for maintaining the temperature of the capillary at a predetermined temperature;
a detection unit for detecting a sample migrating in the capillary; and
an autosampler for selectively inserting a sample-loaded end of the capillary into a sample container containing a sample solution or a buffer container containing a buffer, wherein the autosampler comprises:
a turntable;
hoisting/lowering means for moving up or down the turntable;
rotation drive means for rotating the turntable by a predetermined angle; and
a carousel having a plurality of container mount positions along the circumference thereof and capable of being attached or detached from the turntable, wherein
one of the turntable and the carousel has a projection on a central axis thereof and the other has a projection bearing on a central axis thereof adapted to receive the projection, wherein the carousel can be mounted on the turntable at an arbitrary rotation position thereof, the electrophoresis device further comprising a sensor for detecting the rotation position of the carousel.

2. The electrophoresis device according to claim 1, further comprising a stripper adapted to press down on an upper part of a container on the carousel, into which the capillary is inserted, as the turntable is lowered by the hoisting/lowering means, the stripper comprising a projection for pressing down on the buffer container and another projection for pressing down on the sample container, the projections for the different containers being located at different positions.

3. The electrophoresis device according to claim 1, wherein the capillary passes through the hollow electrode which is located near the sample-loaded end and the capillary protrudes beyond the tip of the hollow electrode.

4. The electrophoresis device according to claim 1, wherein the heater unit comprises:
a planar heater plate;
a pressing plate for pressing down the capillary into intimate contact with the heater plate; and
a plurality of pressing means for pressing the pressing plate down on the heater plate, wherein
the pressing means are disposed behind the pressing plate at positions corresponding to the position of, and therefore along the shape of, the capillary.

5. The electrophoresis device according to claim 4, wherein the heater plate and the pressing plate each comprise either a projection or a groove adapted to engage with the projection at the edge thereof.

6. The electrophoresis device according to claim 1, wherein the detection unit comprises a capillary holder comprising:
a positioning groove for holding the capillary such that a detection window thereof can be correctly positioned;
a light guide portion for guiding an excitation light towards the detection window of the capillary that is being held; and
another light guide portion for allowing fluorescence emitted by the capillary to be acquired, wherein the positioning groove is formed in the shape of U with the same width as the diameter of the capillary and with a depth smaller than the diameter of the capillary.
